# EUROPÄISCHE PATENTSCHRIFT

(11) **EP 1 451 027 B1**
(45) Veröffentlichungstag und Bekanntmachung des Hinweises auf die Patenterteilung: **18.04.2007**
(21) Anmeldenummer: 02787901.4
(22) Anmeldetag: 03.12.2002
(51) Int. Cl.: B60C 23/10

(54) **FAHRZEUG MIT KOMPRESSOR UND VERLÄNGERUNGSEINRICHTUNG FÜR DRUCKSCHLAUCH**
VEHICLE WITH A COMPRESSOR AND AN EXTENSION DEVICE FOR A PRESSURE HOSE
VEHICULE EQUIPE D'UN COMPRESSEUR ET D'UN DISPOSITIF DE RALLONGE POUR UN TUYAU DE PRESSION

(30) Priorität: 04.12.2001 DE 20119653 U; 08.03.2002 DE 10210068
(43) Veröffentlichungstag der Anmeldung: 01.09.2004
(73) Patentinhaber: Stehle, Michael, 88662 Uberlingen (DE)
(72) Erfinder: Stehle, Michael, 88662 Uberlingen (DE)
(74) Vertreter: Weiss, Peter
(86) Internationale Anmeldenummer: PCT/EP2002/013657
(87) Internationale Veröffentlichungsnummer: WO 2003/047890

(56) Entgegenhaltungen:
- DE-A- 3 601 103
- DE-A- 4 140 704
- US-A- 5 730 177
- US-A- 6 004 108

## Beschreibung

Die vorliegende Erfindung betrifft ein Fahrzeug, insbesondere PKW, mit einem Kompressor zum Aufpumpen von Reifen und zum Einbringen von Reifendichtmittel in Reifen.

Es ist bekannt, dass Fahrzeuge, wie PKW's oder LKW's mit einem Kompressor versehen sind, der einem Fahrzeug zum Aufpumpen von Reifen od. dgl. als Zubehörbauteil mitgeliefert wird. Ein derartiger Kompressor ist mit einem Druckschlauch und einem Verlängerungskabel versehen. Dieses Verlängerungskabel lässt sich beispielsweise in eine 12V-Buchse im Fahrzeug zur Speisung des Kompressors einstecken. Dann kann mit dem Kompressor das Rad aufgepumpt werden.

Nachteilig hieran ist jedoch, dass häufig der Kompressor erst umständlich aus seiner Ablage entnommen und aufwendig angeschlossen werden muss.

Zudem ist nachteilig, dass dieser vibriert und laute Geräusche von sich gibt.

Die DE 41 40 704 A1 offenbart eine Vorrichtung zur geregelten Reifendruckeinstellung und Verfahren zur Durchführung einer geregelten Reifendruckeinstellung, wobei ein Kompressor einen Luftdruck erzeugt und permanent für einen konstanten Reifendruck in allen Rädern sorgt. Über eine entsprechende Schaltung ist eine externe Nutzung des Kompressors zur Pannenhilfe für andere Fahrzeuge oder zur Nutzung zum Aufblasen von Schlauchbooten, Fahrradreifen, Luftmatratzen etc. möglich. Zudem ist es auch möglich, den Kompressor durch betreiben von Druckluft betriebenen Werkzeugen und Apparaten, wie Drehschraubern und Wagenhebern einzusetzen. Dabei ist die Länge des Druckluftschlauches an die Grösse des Fahrzeuges angepasst und ggfs. auf einer Rolle aufwickelbar gelagert. Dabei kann der Kompressor als handelsübliches Gerät mobil im Fahrzeug mitgeführt werden.

Die US 6,004,108 zeigt einen fest installierten Kompressor eines Lastkraftwagens, an welchen beispielsweise unterschiedliche Werkzeuge, wie Wagenheber, Bohrmaschinen, Pressluftpistole anschliessbar sind.

Die US 5,730,177 offenbart einen fest im Auto installierten Kompressor, wobei aussen an einem Kotflügel eine entsprechendes Schaltpaneel vorgesehen ist, um einen entsprechenden Luftschlauch zu entnehmen und einen Kompressor ein- oder auszuschalten.

Die DE 36 01 103 A1 zeigt eine Druckluft-Reifenfüllanlage, die an einem geländegängigen Fahrzeug fest installiert zugeordnet ist.

Die JP 2001 212883 offenbart ein mobiles Reifenpannenset, bestehend aus einem Kompressor und einer Halteplatte in welche ein Dichtmittelbehälter zur Aufnahme von Reifendichtmittel aufschraubbar ist. Das mobile Set muss einzeln vor einem Autoreifen aufgestellt werden und umständlich angeschlossen und in Betrieb genommen werden.

Aus der ATZ 10/2001 Jahrgang 103: "Der neue Audi A4 Avant" ist bekannt, dass Werkzeuge sowie Reifendichtmittelsets im Fahrzeug, beispielsweise in einer Reserveradmulde als herausnehmbare Einheiten untergebracht sind. Insbesondere das dort eingelagerte Reifenpannenset muss im Pannenfall einzeln, hinsichtlich Kompressor, Dichtmittelbehälter und Druckschlauch zusammenmontiert und an den defekten Reifen angeschlossen werden. Ein separates elektrisches Verbinden und Anschliessen des Kompressors ist ebenfalls erforderlich.

Der vorliegenden Erfindung liegt die Aufgabe zugrunde, ein Fahrzeug der eingangs genannten Art zu schaffen, welches die genannten Nachteile beseitigt und bei welchem auf einfache und kostengünstig effektive und schnelle Weise ein Kompressor integriert werden kann, um sehr schnell, zuverlässig, dauerhaft Druckluft bereitzustellen.

Zur Lösung dieser Aufgabe führen die Merkmale des Kennzeichen von Anspruch 1 sowie die Merkmale der Kennzeichen des nebengeordneten Anspruches 2.

Bei der vorliegenden Erfindung hat sich als vorteilhaft erwiesen, dem Kompressor eine Verlängerungseinrichtung für einen Druckschlauch zuzuordnen. Die Verlängerungseinrichtung kann beispielsweise als Aufrolleinrichtung mit einem Trommelelement, insbesondere mit einer Trommel versehen sein, auf welcher der Druckschlauch aufgewickelt vorliegt. Durch ein entsprechendes Abwickeln bzw. Abziehen des Druckschlauches von der Trommel lässt sich ein Federelement, Kraftspeicherelement, Gummielement od. dgl. spannen, so dass ein anschliessendes Aufrollen bei ggf. Betätigen eines Auslösehebels sehr leicht möglich ist.

Vorzugsweise sind Kompressor und Aufrolleinrichtung als feste Bestandteile im Fahrzeug integriert. Wird Luft beispielsweise zum Aufpumpen eines Reifens benötigt, oder wird Druckluft zum in Betrieb nehmen einer Vorrichtung zum Bereitstellen von Reifendichtmittel für einen Reifen benötigt, so wird lediglich der Druckschlauch aus der Verlängerungseinrichtung herausgezogen und dann entsprechend ein Reifen oder die Vorrichtung zum Ausbringen von Reifendichtmittel angeschlossen. Dabei kann ggf. beim Herausziehen bzw. beim Abwickeln und Betätigen der Verlängerungseinrichtung der Kompressor automatisch eingeschaltet werden. Dieser kann jedoch auch separat von einem Fahrzeuginnenraum oder direkt am Kompressor über einen entsprechenden Schalter in Betrieb gesetzt werden. Dies soll ebenfalls im Rahmen der vorliegenden Erfindung liegen.

Es hat sich als besonders vorteilhaft erwiesen, die Abrolleinrichtung, insbesondere deren Trommel, sehr klein auszugestalten, diese im Fahrzeuginnenraum, vorzugsweise nahe einer B-Säule und vorzugsweise fahrzeugmittig nahe eines Kardantunnels od. dgl. anzuordnen. Diese kann beispielsweise unter einem Fahrzeugsitz od. dgl. eingebaut bzw. fest installiert werden. Die Verlängerungseinrichtung steht mit zumindest einer Verbindungsleitung mit dem Kompressor in Verbindung, der im Kofferraum oder auch im Motorraum untergebracht sein kann. Dort ist ein direkter Zugriff auf die Energiequelle möglich, wobei gleichzeitig eine gute Dämmung erzielt wird. Zudem können Toträume von Motorinnenraum und/oder Kofferraum für eine feste Installation des Kompressors genutzt werden. Hierdurch lässt sich insgesamt eine Abrolllänge und damit auch eine Einbaugrösse der Abrollvorrichtung reduzieren, wobei gleichzeitig gewährleistet bleibt, dass sämtliche Räder des Fahrzeuges, da die Abrollvorrichtung vorzugsweise mittig angeordnet ist, sehr schnell, bei sehr kurzen Wegen zu allen Reifen, erreicht werden können.

Daher wird lediglich der Druckschlauch durch Herausziehen zu dem aufzupumpenden oder zu reparierenden Reifen geführt und herausgezogen. Ebenfalls ist ein Wiederaufrollen, unterstützt durch Federelemente oder Kraftspeicherelemente wesentlich erleichtert, wobei gleichzeitig der Druckschlauch in der Aufrolleinrichtung versorgt aufgenommen wird. Die Handhabung ist wesentlich erleichtert und kann wesentlich schneller erfolgen.

Es hat sich ferner bei der vorliegenden Erfindung als vorteilhaft erwiesen, die Einheit aus Kompressor und Verlängerungseinrichtung fest, insbesondere in einem Bereich eines Kofferraumes, zwischen Radhaus, Heckschürze und Kotflügel zu integrieren. Von dort ist die Einheit sehr gut zugänglich, der Druckschlauch lässt sich von dieser sehr leicht zum Aufpumpen von beliebigen Gegenständen, wie Reifen, pneumatisch betriebene Wagenheber od. dgl. von der Verlängerungseinrichtung abwickeln. Die Verlängerungseinrichtung kann beispielsweise den Druckschlauch aufgewickelt enthalten, der manuell von dieser abgewickelt werden muss.

Es liegen jedoch auch andere Möglichkeiten der Verlängerungseinrichtung im Rahmen der vorliegenden Erfindung, wie beispielsweise ein Spiralschlauch. Die Verlängerungseinrichtung bzw. der Druckschlauch kann als Spiralschlauch direkt dem Kompressor zugeordnet sein. Dies soll ebenfalls vom vorliegenden Erfindungsgedanken mit umfasst sein.

Ferner hat sich als besonders vorteilhaft erwiesen, der Einheit eine Frontplatte zuzuordnen, die den Kompressor zumindest teilweise übergreift. Diese dient dazu, um hinter der Frontplatte den Schlauch manuell um den Kompressor aufzuwickeln. Die Frontplatte kann beispielsweise Druckanzeigeinstrumente, Ein- und Ausschalter, Spannungsanzeiger, Luftablassventile sowie auch ggf. eine manuell betätigbare Luftpumpe enthalten, um einen entsprechenden Druck zu erzeugen.

Eine derartige Einheit lässt sich sehr leicht bedienen, wobei ein sehr vorteilhafter Einbauraum geschaffen ist, um die Einheit zugangserleichtert und platzsparend unterzubringen. Dort kann beispielsweise auch Reifendichtmittel gut greifbar gelagert werden.

Wie oben beschrieben, lässt sich auch in der Einheit das Reifendichtmittel in einem Gehäuse, insbesondere in einem separaten Aufnahmeraum hierfür einlagern.

Dabei hat sich als vorteilhaft erwiesen, das Gehäuse als Einheit auszubilden, um den Kompressor, den Dichtmittelbehälter sowie die Verlängerungseinrichtung einzubringen und fest als fest installierbare Einheit mit dem Fahrzeug, insbesondere mit einem Einbauraum zu verbinden. Dieser kann beispielsweise im Bereich des Kotflügels innen im Kofferraum zwischen Radhaus und Heckschürze sein. Dieser ist hierfür besonders geeignet. Auch kann beispielsweise hier durch das Reserverad entfallen und zusätzlich Platz geschaffen werden.

Dabei soll auch im Rahmen der vorliegenden Erfindung liegen, das Reifendichtmittel beispielsweise in den Stauraum der Verlängerungseinrichtung einzulagern, wobei die Verlängerungseinrichtung dann beispielsweise im Aufnahmeraum untergebracht werden kann. Hierauf sei die Erfindung nicht beschränkt.

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
Figur 1 eine schematisch dargestellte Seitenansicht auf ein Fahrzeug mit integriertem Kompressor und Verlängerungseinrichtung;
Figur 2 eine schematisch dargestelte Seitenansicht auf eine Einheit aus Kompressor und Verlängerungseinrichtung für Fahrzeuge;
Figur 3 eine perspektivische schematisch dargestellte Ansicht auf einen Teil eines Kofferraumes eines Fahrzeuges;
Figur 4 eine schematisch dargestellte perspektivische Ansicht auf den Kofferraum gemäss Figur 3 mit integrierter Einheit aus Kompressor und Verlängerungseinrichtung in einer Ruhelage;
Figur 5 eine schematisch dargestellte perspektivische Ansicht auf den Kofferraum gemäss den Figuren 3 und 4 eines Fahrzeuges in einer möglichen Gebrauchslage;
Figur 6a eine schematisch dargestellte Draufsicht auf ein weiteres Ausführungsbeispiel auf eine Einheit aus Kompressor und Verlängerungseinrichtung mit Dichtmittelbehälter für Fahrzeuge;

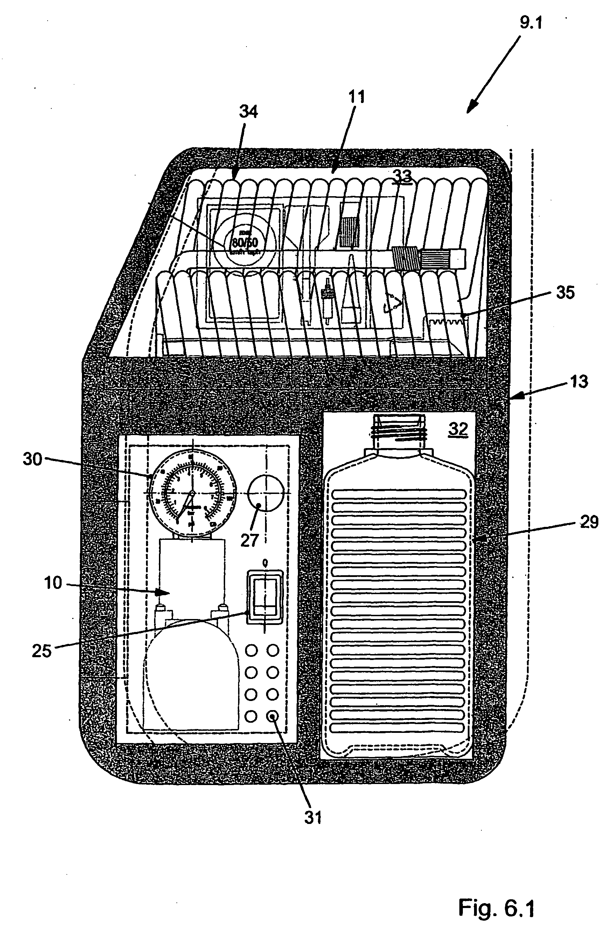

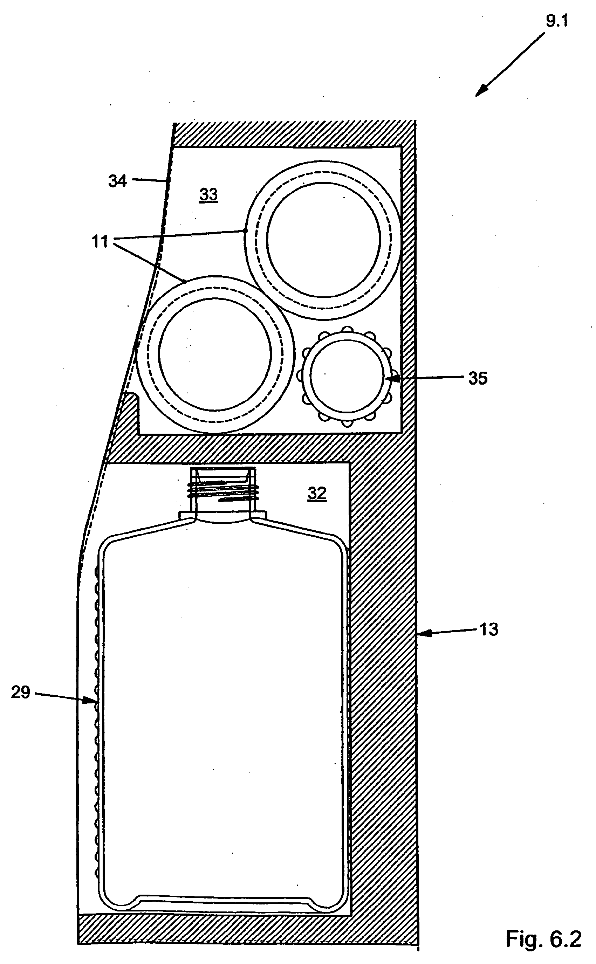

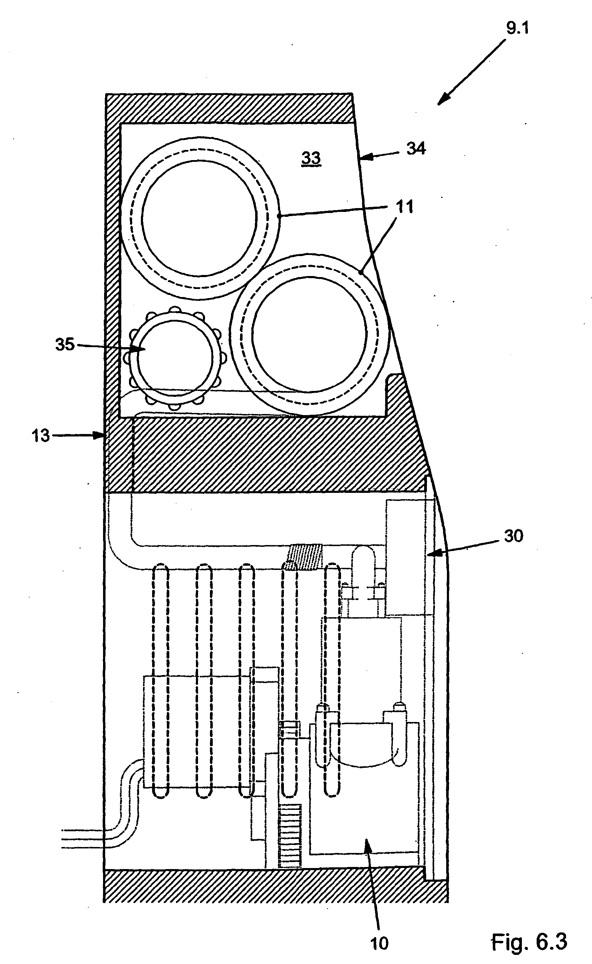

Figuren 6.2, 6.3 jeweils zumindest teilweise aufgeschnittene Seitenansichten der Einheit gemäss Figur 6.1.

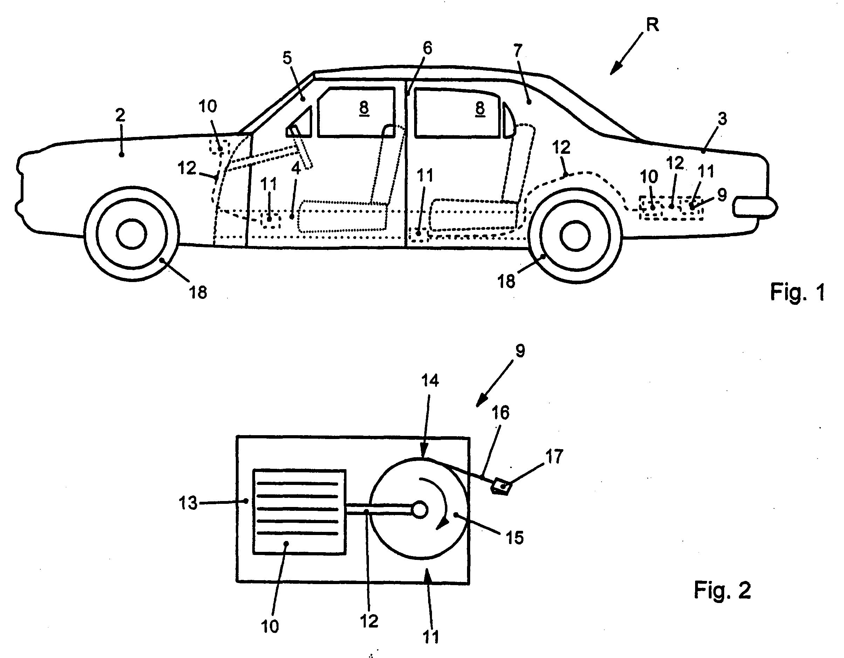

Gemäss Figur 1 kann das Fahrzeug R ein PKW, ein LKW od. dgl. sein. Zumeist weist es einen Motorraum 2 und einen Kofferraum 3 auf, wobei häufig, insbesondere bei heckbetriebenen Fahrzeugen ein Kardantunnel 4 mittig im Fahrzeug R vorgesehen ist. Zwischen einer A-Säule 5 und einer B-Säule 6 sowie zwischen der B-Säule 6 und einer C-Säule 7 sind in einem Innenraum 8 des Fahrzeugs R nicht bezifferte Fahrzeugsitze vorgesehen.

Bei der vorliegenden Erfindung hat sich als besonders vorteilhaft erwiesen, eine Einheit 9, wie sie gestrichelt angedeutet ist, bestehend aus einem Kompressor 10 und einer Verlängerungseinrichtung 11 fest im Fahrzeug R, vorzugsweise im Kofferaum 3 zu installieren. Zwischen Kompressor 10 und Verlängerungseinrichtung 11 ist eine Verbindungsleitung 12 vorgesehen.

Der Kompressor 10 ist vorzugsweise elektrisch betrieben, entsprechende, hier nicht dargestellte Leitungen können ihn mit Energie versorgen.

Wichtig ist jedoch bei der vorliegenden Erfindung, dass, wie insbesondere in Figur 2 dargestellt ist, der Kompressor 10 mit oder ohne einem Gehäuse 13 als Einheit 9 mit zugeordneter Verlängerungseinrichtung 11 im Fahrzeug R fest installiert ist.

Die Verlängerungseinrichtung 11 kann als Aufrolleinrichtung 14 ausgebildet sein und beispielsweise auf einem hier nur angedeuteten Trommelelement 15 einen Druckschlauch 16 als Verlängerungschlauch aufgewickelt tragen.

Endseits ist der Druckschlauch 16, hier nicht dargestellt, in dem Trommelelement 15 zur Verbindungsleitung 12 geführt und steht mit dem Kompressor 10 in Verbindung. Endseits des Druckschlauches 11 kann ein Adapterelement 17, Ventil od. dgl. Anschlusselement zum Anschliessen an Reifenventile oder Vorrichtungen zum Ausbringen von Reifendichtmittel angeschlossen werden.

Bei der vorliegenden Erfindung ist denkbar, den Kompressor 10 mit Verlängerungseinrichtung 11, insbesondere Aufrolleinrichtung 14 zusammen als Einheit 9, beispielsweise in einem Kofferraum 3 eines Fahrzeuges R vorzugsweise im Bereich des Innenkotflügels, fest zu installieren. Dies hat den Vorteil, dass beispielsweise bei einer Reifenpanne oder zum Nachpumpen von Luft in Reifen 18 der Druckschlauch 16 lediglich aus der Verlängerungseinrichtung 11 herausgerollt bzw. abgerollt werden muss, um einen Reifen 18 aufzupumpen.

Entsprechende hier nicht dargestellte Federelemente od. dgl. können ggf. durch Freigeben eines Riegels federbeaufschlagt die Trommel 15 zum Aufrollen des abgerollten Druckschlauches 16 wieder freigeben. Hier sind mehrere Möglichkeiten denkbar.

Ein weiterer Vorteile ist, dass beispielsweise der Kompressor 10 im Kofferraum 3 fest installiert und angeordnet ist und über eine Verbindungsleitung 12 die Verlängerungseinrichtung 11, vorzugsweise nahe der B-Säule 6 angeordnet ist, ggf. nahe im Bereich des Kardantunnels 4, so dass auf diese Weise die Verlängerungseinrichtung 12, insbesondere die Abrolleinrichtung 14 sehr klein ausgebildet werden kann, um eine genügende Länge an Druckschlauch 16 zum Erreichen aller vier Reifen 18 zu gewährleisten.

Wird die Verlängerungseinrichtung 11 im Bereich der C-Säule 6 angeordnet, vorzugsweise mittig im Innenraum 8 des Fahrzeuges R, so sind die Wege zu allen Fahrzeugrädern 18 in etwa gleich gross.

Hierdurch kann insgesamt die Aufrolleinrichtung 14 sehr klein und sehr leicht ausgebildet sein. Sie kann daher unter einem Fahrersitz, Beifahrersitz oder sogar unter dem Rücksitzt untergebracht werden.

Ein weiterer Vorteil der Anordnung des Kompressors 10 im Kofferraum 3 oder im Motorraum 2, ist, dass die Geräusche des Kompressors 10 im Fahrzeuginnenraum 8 nicht oder nur unwesentlich zu hören sind. Dann ist der Kompressor 10 über die Verbindungsleitung 12 mit der Verlängerungseinrichtung 11 verbunden. Dies soll ebenfalls im Rahmen der vorliegenden Erfindung liegen.

Ferner soll daran gedacht sein, dass bei Betätigen, insbesondere bei dem Ausziehen des Druckschlauches 16 aus der Verlängerungseinrichtung 11 der Kompressor 10 in Betrieb gesetzt wird. Entsprechend soll der Kompressor 10 bei vollständigem Einrollen des Druckschlauches 16 in die Verlängerungseinrichtung 11 wieder abgeschaltet werden können. Das Einschalten des Kompressors 10 kann jedoch auch beispielsweise im Fahrzeuginnenraum 8 oder mittels eines separat dafür vorgesehenen Schalters am Kompressor 10 selbst vorgenommen werden können.

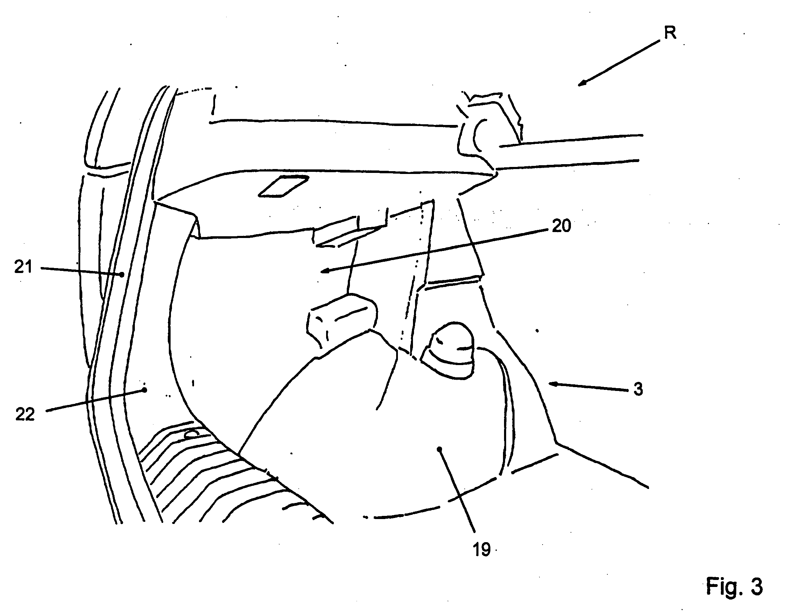

Gemäss Figur 3 ist in perspektivischer Ansicht ein Ausschnitt auf einen geöffneten Kofferraum 3 eines Fahrzeuges R aufgezeigt, wobei insbesondere im Bereich eines Radhauses 19 des Fahrzeuges R ein Einbauraum 20 zwischen einem seitlichen Kotflügel 21 und einer Heckschürze 22 gebildet ist.

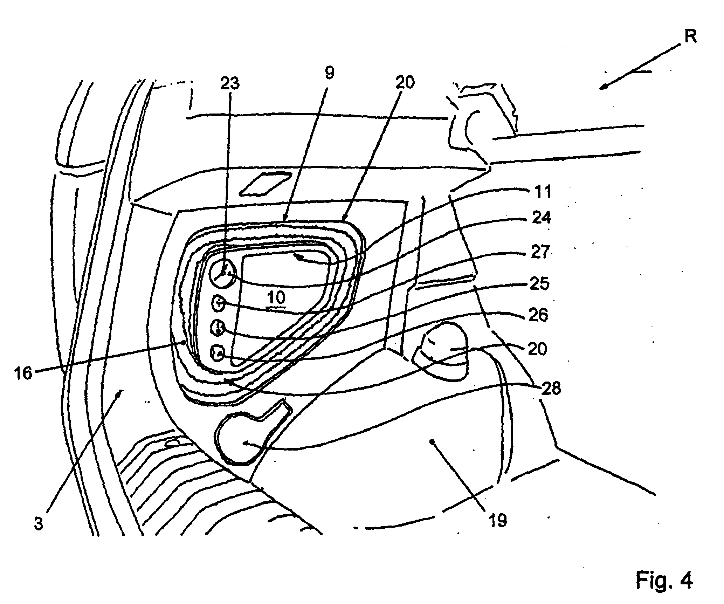

In diesen Aufnahmeraum 20 lässt sich, wie es insbesondere in Figur 4 dargestellt ist, die Einheit 9, bestehend aus Kompressor 10 und Verlängerungseinrichtung 11 fest installieren bzw. integrieren.

Die Einheit 9 ist dabei als kompakte Einheit ausgebildet, wobei ein Bereich einer Frontplatte 23 der Einheit 9 bzw. der Verlängerungseinrichtung 11 über den hier nicht sichtbar gezeigten Kompressor 10 hervorsteht. Innerhalb der Verlängerungseinrichtung 11 lässt sich der Druckschlauch 1.6 auf diese beispielsweise manuell aufwickeln. Ferner kann die Frontplatte 23 eine Druckanzeige 24 sowie ein Ein- und Ausschalter 25 sowie ggf. ein Luftablassventil 27 aufweisen.

Ferner kann eine handbetätigbare Luftpumpe 28 vorgesehen sein, die direkt oder indirekt mit dem Luftschlauch 16 in Verbindung steht, um beispielsweise Luft bereitzustellen, auch bei Stromausfall.

Wichtig ist jedoch, dass der Einbauraum 20 genutzt werden kann, um die Einheit 9 aus der Verlängerungseinrichtung 11 und Kompressor 10 dort zu integrieren.

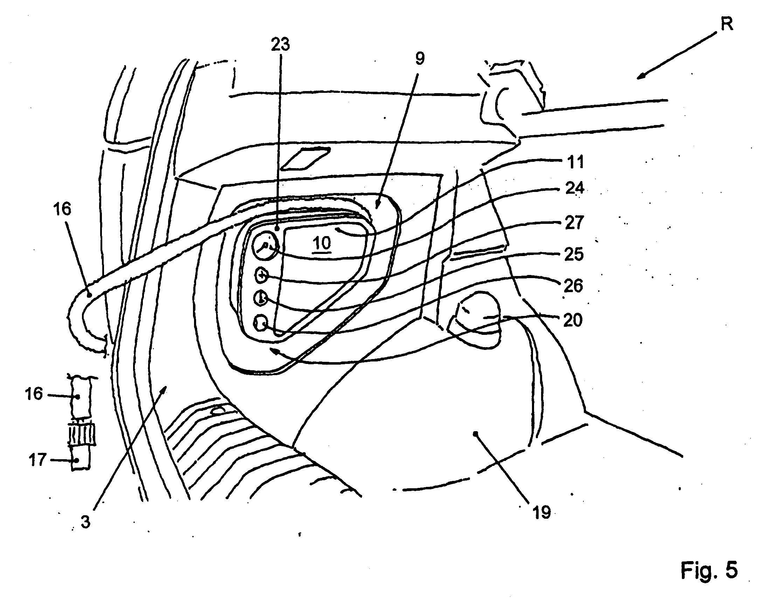

In Figur 5 ist eine Gebrauchslage der Einheit 9 aufgezeigt, wobei der Druckschlauch 16 lediglich von der Einheit 9, insbesondere von deren überragender Frontplatte 23 abgewickelt bzw. abgelegt werden muss. Nach dem Gebrauch, insbesondere nach dem Aufpumpen eines beliebigen Gegenstandes, wie beispielsweise eine Luftmatratze, einen pneumatisch betriebenen Wagenheber od. dgl. lässt sich der Druckschlauch 16 einfach wieder hinter die Frontplatte 23 auf die Einheit 9, insbesondere den Kompressor 10 aufwickeln. Dies soll ebenfalls im Rahmen der vorliegenden Erfindung liegen.

In einem weiteren Ausführungsbeispiel der vorliegenden Erfindung ist eine weitere Einheit 9.1 dargestellt, die in oben beschriebener Weise aus einem schematisch dargestellten Kompressor 10, Verlängerungseinrichtung 11 und einem Dichtmittelbehälter 29 für Reifendichtmittel gebildet ist.

Die Einheit 9.1 weist ein gemeinsames Gehäuse 13 auf, wobei im Bereich des Kompressors 10 nach aussen hin das Gehäuse 13 verschlossen ist, lediglich eine Druckanzeige 30 ist von aussen sichtbar.

Nahe dieser sind Lüftungsöffnungen 31 sowie der Ein-/Ausschalter 25 und das Luftablassventil 27 vorgesehen. Vorzugsweise neben dem Kompressor 10 ist in einem separaten Aufnahmeraum 32 der Dichtmittelbehälter 29 herausnehmbar eingelagert.

Oberhalb von Kompressor 10 und Dichtmittelbehälter 29 ist im Gehäuse 13 ein Stauraum 33 zur Aufnahme der Verlängerungseinrichtung 11 vorgesehen. Über eine Entnahmeöffnung 34 lässt sich die Verlängerungseinrichtung 11, die im bevorzugten Ausführungsbeispiel als Spiralschlauch ausgebildet ist, entnehmen, um beliebige Gegenstände, wie Reifen, Luftmatratzen, Wagenheber etc. aufzupumpen oder durch Verbinden mit einer Entnahmevorrichtung 35, wie sie strichpunktiert in Figur 6.1 dargestellt ist, mit dem Dichtmittelbehälter 29 zu verbinden, um bei einer Reifenpanne das Dichtmittel des Dichtmittelbehälters 29 in den Reifen einzupumpen.

Wichtig bei der vorliegenden Erfindung ist jedoch, dass die Einheit 9.1, in oben beschriebener Weise, als feststehende, fixe Einheit in den Einbauraum 20, innen, im Bereich des Kotflügels 21 fest installierbar ist. Dies soll ebenfalls im Rahmen der vorliegenden Erfindung liegen.

### Positionszahlenliste

| | | | | | |
|---|---|---|---|---|---|
| 1 | Fahrzeug | 34 | Entnahmeöffnung | 67 | |
| 2 | Motorraum | 35 | Entnahmevorrichtung | 68 | |
| 3 | Kofferraum | 36 | | 69 | |
| 4 | Kardantunnel | 37 | | 70 | |
| 5 | A-Säule | 38 | | 71 | |
| 6 | B-Säule | 39 | | 72 | |
| 7 | C-Säule | 40 | | 73 | |
| 8 | Innenraum | 41 | | 74 | |
| 9 | Einheit | 42 | | 75 | |
| 10 | Kompressor | 43 | | 76 | |
| 11 | Verlängerungseinricht. | 44 | | 77 | |
| 12 | verbindungsleitung | 45 | | 78 | |
| 13 | Gehäuse | 46 | | 79 | |
| 14 | Aufrolleinrichtung | 47 | | | |
| 15 | Trommelelement | 48 | | | |
| 16 | Druckschlauch | 49 | | | |
| 17 | Adapterelement | 50 | | | |
| 18 | Fahrzeugräder | 51 | | R | Fahrzeug |
| 19 | Radhaus | 52 | | | |
| 20 | Einbauraum | 53 | | | |
| 21 | Kotflügel | 54 | | | |
| 22 | Deckschürze | 55 | | | |
| 23 | Frontplatte | 56 | | | |
| 24 | Druckanzeige | 57 | | | |
| 25 | Ein-/Ausschalter | 58 | | | |
| 26 | Spannungsanzeiger | 59 | | | |
| 27 | Luftablassventil | 60 | | | |
| 28 | Luftpumpe | 61 | | | |
| 29 | Druckmittelbehälter | 62 | | | |
| 30 | Druckanzeige | 63 | | | |
| 31 | Lüftungsöffnung | 64 | | | |
| 32 | Aufnahmeraum | 65 | | | |
| 33 | Stauraum | 66 | | | |

## Patentansprüche

1. Fahrzeug, insbesondere PKW, mit einem Kompressor (10) zum Aufpumpen von Reifen und zum Einbringen von Reifendichtmittel in Reifen, **dadurch gekennzeichnet, dass** der Kompressor (10) und zumindest eine Verlängerungseinrichtung (11) für einen Druckschlauch (3) und ein Dichtmittelbehälter (29) im Fahrzeug (R) auch im Pannenfall eine fest installierte Einheit (9/9.1) bilden, wobei die Einheit (9.1) aus einem Gehäuse (13) gebildet ist, welches den Kompressor (10) sowie einen Aufnahmeraum (32) für den Dichtmittelbehälter (29) und einen Stauraum (33) für die Verlängerungseinrichtung (11) mit Entnahmeöffnung (34) aufweist, wobei im Pannenfall die Einheit (9/9.1) aus Kompressor (10) und Druckmittelbehälter (29) im Aufnahmeraum (32) verbleiben und nur der Druckschlauch (3) an den defekten Reifen angeschlossen wird.

2. Fahrzeug, insbesondere PKW, mit einem Kompressor (10) zum Aufpumpen von Reifen und zum Einbringen von Reifendichtmittel in Reifen, **dadurch gekennzeichnet, dass** der Kompressor (10) und ein Dichtmittelbehälter (29) im Fahrzeug auch im Pannenfall eine fest installierte Einheit (9/9.1) bilden, wobei Kompressor (10) und die Verlängerungseinrichtung (11) für einen Druckschlauch (3) und einen Dichtmittelbehälter (29) in einem Kofferraum (3), in einem Einbauraum (20) innen im Bereich eines Kotflügels (21) fest installiert sind, wobei im Pannenfall die Einheit (9/9.1) aus Kompressor (10) und Druckmittelbehälter (29) im Aufnahmeraum (32) verbleiben und nur der Druckschlauch (3) an den defekten Reifen angeschlossen wird.

3. Fahrzeug nach Anspruch 1 oder 2, **dadurch gekennzeichnet, dass** der Kompressor (10) und zumindest eine Verlängerungseinrichtung (11) für einen Druckschlauch (16) im Fahrzeug (R) fest installiert angeordnet sind.

4. Fahrzeug nach wenigstens einem der Ansprüche 1 bis 3, **dadurch gekennzeichnet, dass** die Verlängerungseinrichtung (11) als eine Aufrolleinrichtung (14) mit Trommelelement (15) und Druckschlauch (16) ausgebildet ist, die über eine Verbindungsleitung (12) mit dem Kompressor (10) in Verbindung steht.

5. Fahrzeug nach wenigstens einem der Ansprüche 1 bis 4, **dadurch gekennzeichnet, dass** dem Kompressor (10) zumindest eine Verlängerungseinrichtung (11) für einen Druckschlauch (16) zugeordnet ist.

6. Fahrzeug nach wenigstens einem der Ansprüche 1 bis 5, **dadurch gekennzeichnet, dass** der Kompressor (10) und/oder die Verlängerungseinrichtung (11) im Bereich eines Innenraumes (8), insbesondere im Bereich der C-Säule (7) und nahe eines Kardantunnels(4) angeordnet ist.

7. Fahrzeug nach wenigstens einem der Ansprüche 2 bis 6, **dadurch gekennzeichnet, dass** die Verlängerungseinrichtung (10) im Bereich des Kardantunnels (4) ggf. unter Fahrer- oder Beifahrersitz angeordnet ist.

8. Fahrzeug nach wenigstens einem der Ansprüche 1 bis 7, **dadurch gekennzeichnet, dass** Kompressor (10) und/oder Verlängerungseinrichtung (11) als eine oder zwei separate Einheiten (9) im Bereich eines Motorraumes (2) des Fahrzeuges (R) fest angeordnet sind.

9. Fahrzeug nach wenigstens einem der Ansprüche 1 bis 8, **dadurch gekennzeichnet, dass** der Kompressor (10) und/oder die Verlängerungseinrichtung (11) im Bereich zwischen einer A-Säule (5) oder B-Säule (6) oder in einem Bereich zwischen einer A-Säule (5) und einer B-Säule (6) in einem Innenraum (8), vorzugsweise nahe eines Kardantummels (4) fest installiert sind.

10. Fahrzeug nach wenigstens einem der Ansprüche 1 bis 9, **dadurch gekennzeichnet, dass** der Kompressor (10) in einem Motorraum (2) oder in einem Kofferraum (3) fest installiert ist und die Verlängerungseinrichtung (11) zwischen einer A-Säule (5) und einer C-Säule (7) in einem Innenraum (8) des Fahrzeuges (R) nahe eines Kardantunnels (4) angeordnet ist.

11. Fahrzeug nach wenigstens einem der Ansprüche 2 bis 10, **dadurch gekennzeichnet, dass** die Einheit (9/9.1) aus Kompressor (10) und/oder Dichtmittelbehälter (29) und Verlängerungseinrichtung (11) innen im Bereich des Kotflügels (21) zwischen einer Heckschürze (22) und einem Radhaus (19) fest installiert in dem Einbauraum (20) angeordnet ist.

12. Fahrzeug nach wenigstens einem der Ansprüche 1 bis 11, **dadurch gekennzeichnet, dass** die Einheit (9) eine Frontplatte (23) aufweist, die den Kompressor (10) überragt, wobei hinter der Frontplatte (23) der Druckschlauch (16) mit Adapterelement (17) aufwickelbar ist.

13. Fahrzeug nach wenigstens einem der Ansprüche 1 bis 12, **dadurch gekennzeichnet, dass** der Einheit (9) eine Druckanzeige (24), ein Ein- und Ausschalter (25), ein Spannungsanzeiger (26), ein Luftablassventil (27) und ggf. eine handbetätigbare Luftpumpe (28) zugeordnet ist.

14. Fahrzeug nach wenigstens einem der Ansprüche 1 bis 13, **dadurch gekennzeichnet, dass** die Verlängerungseinrichtung (11) als direkt an den Kompressor (10) anschliessbaren Spiralschlauch ausgebildet ist.

## Claims

1. Vehicle, in particular a passenger car, having a compressor (10) for inflating tyres and for introducing tyre sealing medium into tyres, **characterized in that** the compressor (10) and at least one extension device (11) for a pressure hose (3) and a sealing medium container (29) in the vehicle (R) form a permanently installed unit (9/9.1) also in the event of a breakdown, wherein the unit (9.1) is formed by a housing (13), which comprises the compressor (10) as well as a location space (32) for the sealing medium container (29) and a stowage space (33) for the extension device (11) with removal opening (34), wherein in the event of a breakdown the unit (9/9.1) comprising compressor (10) and pressure medium container (29) remain in the location space (32) and only the pressure hose (3) is connected to the defective tyre.

2. Vehicle, in particular a passenger car, having a compressor (10) for inflating tyres and for introducing tyre sealing medium into tyres, **characterized in that** the compressor (10) and a sealing medium container (29) in the vehicle form a permanently installed unit (9/9.1) also in the event of a breakdown, wherein compressor (10) and the extension device (11) for a pressure hose (3) and a sealing medium container (29) are permanently installed in a luggage compartment (3), in an installation space (20) internally in the region of a wing (21), wherein in the event of a breakdown the unit (9/9.1) comprising compressor (10) and pressure medium container (29) remain in the location space (32) and only the pressure hose (3) is connected to the defective tyre.

3. Vehicle according to claim 1 or 2, **characterized in that** the compressor (10) and at least one extension device (11) for a pressure hose (16) are disposed in a permanently installed manner in the vehicle (R).

4. Vehicle according to at least one of claims 1 to 3, **characterized in that** the extension device (11) is designed as a roll-up device (14), which comprises drum element (15) and pressure hose (16) and is connected by a connection line (12) to the compressor (10).

5. Vehicle according to at least one of claims 1 to 4, **characterized in that** at least one extension device (11) for a pressure hose (16) is associated with the compressor (10).

6. Vehicle according to at least one of claims 1 to 5, **characterized in that** the compressor (10) and/or the extension device (11) is disposed in the region of an inner space (8), in particular in the region of the C-pillar (7) and close to a cardan tunnel (4).

7. Vehicle according to at least one of claims 2 to 6, **characterized in that** the extension device (10) is disposed in the region of the cardan tunnel (4) optionally under the seat of the driver or front-seat passenger.

8. Vehicle according to at least one of claims 1 to 7, **characterized in that** compressor (10) and/or extension device (11) are permanently disposed as one or two separate units (9) in the region of an engine compartment (2) of the vehicle (R).

9. Vehicle according to at least one of claims 1 to 8, **characterized in that** the compressor (10) and/or the extension device (11) are permanently installed in the region between an A-pillar (5) or B-pillar (6) or in a region between an A-pillar (5) and a B-pillar (6) in an inner space (8), preferably close to a cardan tunnel (4).

10. Vehicle according to at least one of claims 1 to 9, **characterized in that** the compressor (10) is permanently installed in an engine compartment (2) or in a luggage compartment (3) and the extension device (11) is disposed between an A-pillar (5) and a C-pillar (7) in an inner space (8) of the vehicle (R) close to a cardan tunnel (4).

11. Vehicle according to at least one of claims 2 to 10, **characterized in that** the unit (9/9.1) comprising compressor (10) and/or sealing medium container (29) and extension device (11) is disposed internally in the region of the wing (21) between a rear apron (22) and a wheel arch (19), permanently installed in the installation space (20).

12. Vehicle according to at least one of claims 1 to 11, **characterized in that** the unit (9) has a front plate (23) that projects from the compressor (10), wherein the pressure hose (16) with adapter element (17) may be wound up behind the front plate (23).

13. Vehicle according to at least one of claims 1 to 12, **characterized in that** associated with the unit (9) is a pressure display (24), an on/off switch (25), a charge indicator (26), a pressure release valve (27) and optionally a manually operable air pump (28).

14. Vehicle according to at least one of claims 1 to 13, **characterized in that** the extension device (11) is designed as a spiral hose that is connectable directly to the compressor (10).

## Revendications

1. Véhicule, en particulier voiture automobile, avec un compresseur (10) destiné à gonfler les pneus et à introduire un fluide d'étanchéité dans les pneus, **caractérisé par le fait que** le compresseur (10) et au moins un dispositif de prolongation (11) d'un flexible à pression (3) et un réservoir à fluide d'étanchéité (29) dans le véhicule (R) constituent, même en cas de panne, une unité installée fixe (9/9.1, l'unité (9.1) étant constituée d'un boîtier (13) qui présente le compresseur (10) ainsi qu'un espace de réception (32) du réservoir à fluide d'étanchéité (29) et un espace d'accumulation (33) du dispositif de prolongation (11) avec une ouverture de prélèvement (34), l'unité (9/9.1) composée du compresseur (10) et du réservoir à fluide d'étanchéité (29) restant, en cas de panne, dans l'espace de réception (32) et seul le flexible à pression (3) étant raccordé au pneu défectueux.

2. Véhicule, en particulier voiture automobile, avec un compresseur (10) destiné à gonfler les pneus et à introduire un fluide d'étanchéité dans les pneus, **caractérisé par le fait que** le compresseur (10) et un réservoir à fluide d'étanchéité (29) dans le véhicule constituent, même en cas de panne, une unité installée fixe (9/9.1), le compresseur (10) et le dispositif de prolongation (11) d'un flexible à pression (3) et d'un réservoir à fluide d'étanchéité (29) dans un espace de coffre (3) étant installés fixes dans un espace d'encastrement (20) intérieur à l'endroit d'un garde-boue (21), l'unité (9/9.1) composée du compresseur (10) et du réservoir à fluide d'étanchéité (29) restant, en cas de panne, dans l'espace de réception (32) et seul le flexible à pression (3) étant raccordé au pneu défectueux.

3. Véhicule selon la revendication 1 ou 2, **caractérisé par le fait que** le compresseur (10) et au moins un dispositif de prolongation (11) d'un flexible à pression (16) dans le véhicule (R) sont disposés installés fixes.

4. Véhicule selon au moins l'une des revendications 1 à 3, **caractérisé par le fait que** le dispositif de prolongation (11) est réalisé sous forme de dispositif d'enroulement (14), avec un élément de tambour (15) et un flexible à pression (16), qui communique, par l'intermédiaire d'un conduit de connexion (12), avec le compresseur (10).

5. Véhicule selon au moins l'une des revendications 1 à 4, **caractérisé par le fait qu'**au compresseur (10) est associé au moins un dispositif de prolongation (11) d'un flexible à pression (16).

6. Véhicule selon au moins l'une des revendications 1 à 5, **caractérisé par le fait qu'**au compresseur (10) et/ou le dispositif de prolongation (11) est disposé à l'endroit d'un espace intérieur (8), en particulier à l'endroit d'une colonne en "C" (7) et près d'un tunnel à cardan (4).

7. Véhicule selon au moins l'une des revendications 2 à 6, **caractérisé par le fait que** le dispositif de prolongation (10) est disposé à l'endroit du tunnel à cardan (4), éventuellement sous le siège du conducteur ou du convoyeur.

8. Véhicule selon au moins l'une des revendications 1 à 7, **caractérisé par le fait que** le compresseur (10) et/ou le dispositif de prolongation (11) sont disposés fixes sous forme d'une ou de deux unités séparées (9) à l'endroit d'une chambre de moteur (2) du véhicule (R).

9. Véhicule selon au moins l'une des revendications 1 à 8, **caractérisé par le fait que** le compresseur (10) et/ou le dispositif de prolongation (11) sont installés fixes dans la zone entre les colonnes A (5) ou les colonnes B (6) ou dans une zone entre une colonne A (5) et une colonne B (6) dans un espace intérieur (8), de préférence près d'un tunnel à cardan (4).

10. Véhicule selon au moins l'une des revendications 1 à 9, **caractérisé par le fait que** le compresseur (10) est installé fixe dans une chambre de moteur (2) ou dans un espace de coffre (3) et que le dispositif de prolongation (11) est disposé entre une colonne A (5) et une colonne C (7) dans un espace intérieur (8) du véhicule (R), près d'un tunnel à cardan (4).

11. Véhicule selon au moins l'une des revendications 2 à 10, **caractérisé par le fait que** l'unité (9/9.1) composé du compresseur (10) et/ou du réservoir à fluide d'étanchéité (29) et du dispositif de prolongation (11) est disposé installé fixe intérieurement à l'endroit du garde-boue (21), entre une jupe arrière (22) et un carter de roue (19), dans l'espace d'encastrement (20).

12. Véhicule selon au moins l'une des revendications 1 à 11, **caractérisé par le fait que** l'unité (9) présente une plaque frontale (23) qui fait saillie par rapport au compresseur (10), derrière la plaque frontale (23) pouvant être enroulé le flexible à pression (16) avec l'élément adaptateur (17).

13. Véhicule selon au moins l'une des revendications 1 à 12, **caractérisé par le fait qu'**à l'unité (9) est associé un indicateur de pression (24), un commutateur de marche/arrêt (25), un indicateur de tension (26), une soupape de purge d'air (27) et éventuellement une pompe à air (23) actionnable manuellement.

14. Véhicule selon au moins l'une des revendications 1 à 13, **caractérisé par le fait que** le dispositif de prolongation (11) est réalisé sous forme de flexible en spirale pouvant être connecté directement au compresseur (10).
